# FASCICULE DE BREVET EUROPEEN

(11) **EP 2 738 099 B1**
(45) Date de publication et mention de la délivrance du brevet: **01.01.2020**
(21) Numéro de dépôt: 13194704.6
(22) Date de dépôt: 27.11.2013
(51) Int. Cl.: B64D 43/02, G01C 23/00, G05D 1/06

(54) **AIDE AU PILOTAGE D'UN AÉRONEF EN SITUATION DE DÉCROCHAGE**
PILOTENASSISTENZSYSTEM FÜR EIN LUFTFAHRZEUG BEI STRÖMUNGSABRISS
PILOT SUPPORT SYSTEM OF AN AIRCRAFT DURING STALL

(30) Priorité: 30.11.2012 FR 1261446
(43) Date de publication de la demande: 04.06.2014
(73) Titulaire: Airbus, 31700 Blagnac (FR)
(72) Inventeur: Nelson, Harry, 31820 Pibrac (FR)
(74) Mandataire: Augarde, Eric

(56) Documents cités:
- EP-A2- 0 224 278
- EP-A2- 0 545 473
- US-A1- 2011 172 855
- US-A1- 2011 205 090

## Description

### DOMAINE TECHNIQUE

La présente invention concerne le domaine de procédés et systèmes embarqués d'aide au pilotage d'un aéronef et plus particulièrement, pour alerter l'équipage de l'approche vers un décrochage et l'aider à contrôler l'aéronef.

### ÉTAT DE LA TECHNIQUE ANTÉRIEURE

Le décrochage consiste en une perte brusque de portance de l'aéronef qui peut être dû à un très grand angle d'incidence (ou angle d'attaque) entre la corde de profil d'une aile et le vecteur vitesse de l'aéronef. Plus particulièrement, lorsque l'angle de tangage augmente, l'angle d'incidence augmente, la portance augmente, et l'écoulement à l'extrados de l'aile commence à se décoller aux alentours du bord de fuite. Lorsque l'angle d'incidence atteint une valeur critique (dite valeur de décrochage) qui dépend des caractéristiques de l'aile, un décollement de l'air peut se produire à l'extrados de l'aile entraînant une chute de portance.

De manière générale, chaque aile possède un capteur (par exemple, une languette située au bord de l'aile) pour mesurer la valeur courante de l'angle d'incidence. La mesure est transmise à un indicateur sur le tableau de bord donnant la valeur courante de l'angle d'incidence.

En outre, lorsque l'angle d'incidence commence à s'approcher de la valeur de décrochage, le capteur de mesure d'angle d'incidence déclenche dans la cabine des alertes de type visuel, et/ou sonore et/ou tactile (vibration du manche). Le pilote pousse alors sur le manche pour retrouver un angle d'incidence inférieur à la valeur de décrochage.

Les différentes alertes permettent ainsi à l'équipage de remédier à la situation pour que l'aéronef n'entre pas en décrochage. Toutefois, ces alertes ne fournissent pas une aide au pilotage pour faciliter le rétablissement du contrôle de l'aéronef.

Le document EP0224278, qui montre toutes les caractéristique du préambule de la revendication 1, décrit une alerte connue de l'état de la technique.

Par ailleurs, l'équipage ne possède pas des indications précises lui permettant, si nécessaire, d'amplement augmenter la portance sans dépasser l'incidence de décrochage.

L'objet de la présente invention est de proposer un système et procédé d'aide au pilotage simple, intuitif et précis remédiant aux inconvénients précités, en particulier en fournissant à l'équipage une détection visuelle facile à interpréter pour ne pas entrer en décrochage et une vrai aide de pilotage pour contrôler l'aéronef dans des situations de décrochage.

### EXPOSÉ DE L'INVENTION

La présente invention est définie par un procédé d'aide au pilotage d'un aéronef, selon lequel on présente sur une échelle de tangage d'un écran de visualisation, un pointeur de trajectoire représentant un vecteur courant de trajectoire de vol et un pointeur de tangage indiquant une valeur courante d'angle de tangage, le procédé comportant les étapes suivantes :
- déterminer une valeur d'angle limite de tangage représentative d'un angle d'incidence maximal admissible dépendant d'un ensemble de paramètres de vol et configurations de l'aéronef, et
- afficher sur ladite échelle de tangage de l'écran de visualisation un pointeur d'incidence maximale indiquant ladite valeur limite d'angle de tangage.

Ce procédé permet au pilote d'avoir une détection visuelle rapide d'approche ou d'entrée en décrochage et lui permet de contrôler l'aéronef directement en relation avec l'angle de tangage pour sortir du décrochage et rétablir l'altitude avec précision sans aucun décrochage secondaire.

Lesdits pointeurs d'incidence maximale et de trajectoire forment des bornes supérieure et inférieure respectivement d'une enveloppe dynamique de sécurité représentative d'un vol normal de l'aéronef.

Ainsi, l'enveloppe dynamique assure une marge de sécurité visuelle facile à interpréter. Plus particulièrement, le pilote peut être assuré que l'aéronef est en vol normal tant que le pointeur de tangage est compris dans l'enveloppe et peut détecter rapidement l'approche vers un décrochage dès que le pointeur de tangage s'approche de la borne supérieure de l'enveloppe. En outre, l'enveloppe dynamique permet au pilote de sortir d'une situation de décrochage tout en profitant au maximum de la marge de sécurité de tangage pour retrouver avec précision une altitude initiale sans dépasser l'incidence maximale.

La position relative et/ou l'étendue de l'enveloppe dynamique par rapport à l'échelle de tangage évoluent en fonction de la variation des paramètres de vol comportant le nombre de Mach et le taux de tangage, et configurations de l'aéronef.

Ceci permet une détection en temps réel de l'approche vers un décrochage.

A titre d'exemple, ladite enveloppe dynamique est un rectangle dont les côtés supérieur et inférieur sont formés par les pointeurs d'incidence maximale et de trajectoire respectivement procurant alors au pilote une détection visuelle simple et intuitive.

On notera que lors d'une situation de vol normal, l'affichage dudit pointeur d'incidence maximale ou de ladite enveloppe dynamique est avantageusement réalisé sur demande du pilote. Ceci laisse au pilote la liberté de sélectionner ou non l'affichage de l'enveloppe dynamique afin de ne pas surcharger l'écran de visualisation.

Avantageusement, l'affichage dudit pointeur d'incidence maximale ou de ladite enveloppe dynamique est réalisé de manière automatique dès que l'aéronef commence à entrer en décrochage. Ceci permet d'alerter le pilote de l'approche vers un décrochage imminent même si l'affichage de l'enveloppe dynamique n'a pas été présélectionné par le pilote. En outre, l'affichage dudit pointeur d'incidence maximale ou de ladite enveloppe dynamique persiste après la sortie du décrochage jusqu'à ce qu'il soit supprimé par le pilote.

Selon l'invention, l'affichage dudit pointeur d'incidence maximale ou de ladite enveloppe dynamique est décliné en différentes couleurs comprenant une première couleur représentant une situation de vol normal, une deuxième couleur représentant une situation d'approche vers un décrochage, et une troisième couleur représentant une situation de décrochage. Ceci permet au pilote de distinguer de manière rapide et intuitive entre la situation d'approche vers un décrochage, la situation d'entrée en décrochage, et la situation de sortie du décrochage.

Avantageusement, la situation de décrochage est accompagnée par un affichage de flèches directionnelles dirigées dans le sens allant du pointeur de tangage vers l'intérieur de ladite enveloppe dynamique. Ceci aide le pilote à récupérer la maîtrise de l'aéronef en lui indiquant de diminuer l'angle de tangage pour le ramener à l'intérieur de la marge de sécurité définie par l'enveloppe dynamique.

Avantageusement, le procédé comporte l'affichage de signaux de commande de roulis pour rétablir la stabilité latérale de l'aéronef après la sortie du décrochage ou du moment que l'on n'est pas en situation de décrochage.

Ceci permet de guider le pilote dans ses manœuvres de roulis pourvu que le pointeur de tangage soit déjà dans l'enveloppe dynamique.

Avantageusement, les signaux de commande de roulis peuvent comporter des flèches déclinées en différentes couleurs et/ou tailles et/ou clignotantes selon que l'opération de remise à l'horizon est réalisée dans le bon ou mauvais sens. Plus particulièrement, ceci permet d'attirer l'attention du pilote au cas où l'opération de remise à l'horizon est entrain de se dérouler dans le mauvais sens.

Avantageusement, le procédé comporte l'affichage sur l'écran de visualisation d'une échelle de vitesse de remplacement en cas de panne d'un indicateur habituel de vitesse.

L'invention vise également un système d'aide au pilotage d'un aéronef, comportant un écran de visualisation présentant sur une échelle de tangage, un pointeur de trajectoire représentant un vecteur courant de trajectoire de vol et un pointeur de tangage indiquant une valeur courante d'angle de tangage, comportant :
- des moyens de calcul pour déterminer une valeur d'angle limite de tangage représentative d'un angle d'incidence maximal admissible dépendant d'un ensemble de paramètres de vol et configurations de l'aéronef, et
- des moyens de calcul pour afficher sur ladite échelle de tangage de l'écran de visualisation un pointeur d'incidence maximale indiquant ladite valeur limite d'angle de tangage.

L'invention vise aussi un aéronef comportant un système d'aide au pilotage selon les caractéristiques ci-dessus.

### BRÈVE DESCRIPTION DES DESSINS

La Fig. 1 illustre de manière schématique un système embarqué d'aide au pilotage d'un aéronef, selon l'invention ;
Les Figs. 2A-2H illustrent de manière schématique l'affichage sur l'écran de visualisation du système de la Fig. 1, d'un enveloppe dynamique dans différentes situations de vol ;
Les Figs. 3A-3C illustrent de manière schématique l'affichage sur l'écran de visualisation, de signaux de commande de roulis pour guider l'équipage dans des mouvements de roulis, selon l'invention ; et
La Fig. 4 illustre de manière schématique l'affichage sur l'écran de visualisation d'un BUSS, selon l'invention.

### EXPOSÉ DÉTAILLÉ DE MODES DE RÉALISATION PARTICULIERS

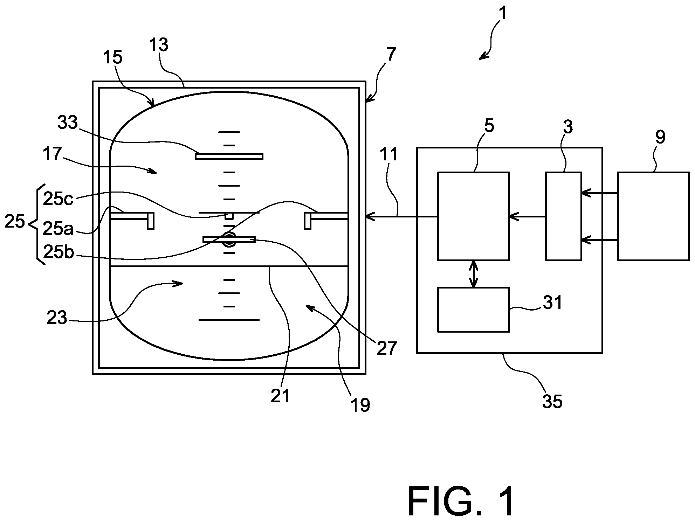

La Fig. 1 illustre de manière schématique un système embarqué d'aide au pilotage d'un aéronef, selon l'invention. On notera que cette figure est également une illustration du procédé d'aide au pilotage, selon l'invention.

Le système 1 embarqué d'aide au pilotage comporte des moyens d'acquisition 3, des moyens de traitement 5, et des moyens d'interface 7.

Les moyens d'acquisition 3 sont configurés pour acquérir des mesures ou données depuis un ensemble 9 de capteurs et/ou de calculateurs de contrôle de l'aéronef, relatives à un ensemble de paramètres de vol ainsi qu'à des configurations de l'aéronef. L'ensemble de paramètres de vol comporte par exemple, la vitesse de l'aéronef par rapport à l'air, le nombre de Mach, la masse de l'aéronef, la densité de l'air, le facteur de charge, le gradient de portance, l'angle d'incidence, etc., tandis que les configurations de l'aéronef comportent par exemple la position des volets ou d'autres commandes de vol.

Les moyens de traitement 5 utilisent les données acquises par les moyens d'acquisition 3 pour déterminer de manière usuelle les angles de roulis et de tangage, le vecteur vitesse de l'aéronef ainsi que d'autres informations utiles pour l'équipage.

Les moyens d'acquisition 3 et de traitement 5 sont reliés via des moyens de liaisons 11 aux moyens d'interface 7 qui comprennent un indicateur ou un écran de pilotage 13 de type PFD (Pilot Flight Display) déjà existant à bord de l'aéronef.

Sur un écran de visualisation 15 du PFD, on affiche en général, l'attitude ou l'assiette de l'aéronef par rapport à un horizon artificiel. L'affichage classique comporte une partie supérieure 17 et une partie inférieure 19 séparées entre elles par une ligne d'horizon 21 artificiel. La partie supérieure 17 est en général colorée en bleu pour représenter le ciel et l'autre partie 19 en marron pour représenter la terre. La ligne d'horizon 21 sert également comme un indicateur d'angle de roulis par rapport à des graduations de roulis (non représentées) présentes sur le périmètre de l'écran de visualisation.

L'affichage sur l'écran de visualisation 15 comporte également des graduations 23 de part et d'autre de la ligne d'horizon 21 formant une échelle 23 de tangage ainsi qu'un pointeur de tangage 25 indiquant la valeur courante d'angle de tangage. Le pointeur de tangage 25 comprend en général des premier et second éléments 25a, 25b en forme d'équerre de part et d'autre d'un élément central 25c servant d'aiguille pour indiquer l'angle de tangage. L'affichage comporte aussi un pointeur de trajectoire 27 mesurant sur l'échelle 23 de tangage, la direction d'un vecteur courant de trajectoire de vol par rapport à la ligne d'horizon 21. Le pointeur de trajectoire 27 est en général en forme de maquette d'aéronef très simplifiée.

Conformément à l'invention, le système 1 d'aide au pilotage comporte des moyens de calcul 31 pour déterminer une valeur d'angle limite de tangage représentative d'un angle d'incidence maximal admissible. En outre, l'affichage sur l'écran de visualisation 15 comporte un pointeur d'incidence maximale 33 indiquant sur l'échelle 15 de tangage la valeur limite d'angle de tangage au-delà de laquelle l'aéronef entre en décrochage.

Dans un mode de réalisation préféré de l'invention, les moyens de calcul 31, les moyens d'acquisition 3 et les moyens de traitement 5 sont regroupés en une seule et même unité centrale 35 de traitement au sein d'un calculateur embarqué (non représenté) de l'aéronef. Dans ce cas, les moyens de calcul 31 peuvent être constitués d'un module algorithmique enregistré dans une mémoire du calculateur pour être mise en œuvre par l'unité centrale 35 du calculateur. Plus particulièrement, la mémoire du calculateur peut comprendre un programme d'ordinateur comprenant des instructions de code correspondant au module algorithmique pour la mise en œuvre du procédé selon l'invention, lorsque le programme d'ordinateur est exécuté par l'unité centrale 35 de traitement.

Ainsi, le système ou procédé d'aide au pilotage selon l'invention est évolutif et peut être facilement installé dans les aéronefs existants offrant une solution viable à faibles coûts.

Le module algorithmique (ou moyens de calcul 31) utilise un modèle de sustentation de l'aéronef préenregistré dans une mémoire du calculateur pour déterminer de manière connue l'angle d'incidence maximal admissible en fonction notamment de la position des moyens hypersustentateurs (becs, volets, etc.), ainsi que de la masse de l'aéronef, et de la vitesse de l'aéronef par rapport à l'air ou du nombre de Mach. On notera que l'angle d'incidence maximal admissible est utilisé par ailleurs, pour d'autres applications connues de pilotage ou de commande de vol.

En outre, le module algorithmique (ou moyens de calcul 31) détermine une marge d'angles d'incidence en calculant la différence entre la valeur de l'angle d'incidence maximale admissible et la valeur courante de l'angle d'incidence mesurée par le capteur d'incidence (non représenté). Cette différence est ensuite exprimée en termes d'angle de tangage et mise à l'échelle pour définir la valeur de l'angle limite de tangage par rapport à la valeur courante d'angle de tangage. Ainsi, la valeur de l'angle limite de tangage est déterminée en temps réel sachant qu'elle évolue avec la modification des différents paramètres et configurations de l'aéronef.

On notera qu'en vol normal, l'équipage peut à tout moment et pour tout le vol normal sélectionner d'afficher ou de ne pas afficher le pointeur d'incidence maximale 33. Toutefois, l'affichage de ce pointeur 33 est réalisé de manière automatique dès que l'aéronef commence à entrer en décrochage et persiste même après le rétablissement d'un vol normal et ce jusqu'à ce qu'il soit éventuellement supprimé par le pilote.

En outre, l'affichage des pointeurs d'incidence maximale 33 et de trajectoire 27 peut être réalisé en différentes couleurs selon que l'aéronef est en situation de vol normal, en situation d'approche vers un décrochage, ou en situation de décrochage permettant ainsi au pilote de distinguer de manière rapide et intuitive entre les différentes situations.

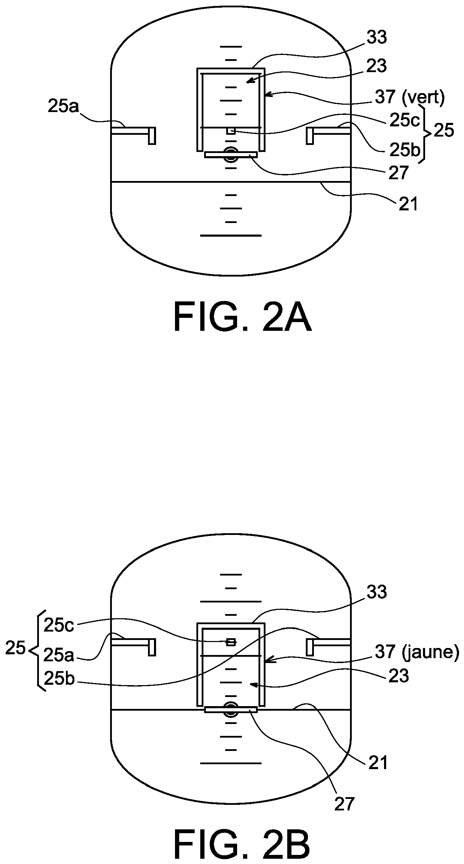

Selon l'invention, le pointeur d'incidence maximale 33 et le pointeur de trajectoire 27 forment des bornes supérieure et inférieure respectivement d'une enveloppe dynamique 37 de sécurité (voir Fig. 2A) représentative d'un vol normal de l'aéronef. Ainsi, l'enveloppe dynamique assure une marge de sécurité entre la valeur courante d'angle de tangage et la valeur de l'angle limite de tangage. Cette marge de sécurité visuelle est facile à interpréter et traduit le domaine de manœuvre accessible à l'équipage pour rester en mode de vol normal et pour ne pas entrer en situation de décrochage. Comme pour le pointeur d'incidence maximale 33, le pilote peut décider d'afficher l'enveloppe dynamique 37. L'affichage de l'enveloppe dynamique 37 est réalisé de manière automatique en cas de décrochage.

Les Figs. 2A-2H illustrent l'affichage de l'enveloppe dynamique selon l'invention dans différentes situations de vol.

Selon ces exemples, l'enveloppe dynamique 37 est de forme rectangulaire. Les côtés supérieur et inférieur du rectangle sont formés par les pointeurs d'incidence maximale 33 et de trajectoire 27 respectivement, les côtés latéraux du rectangle permettant d'illustrer la relation entre ces deux pointeurs. Bien entendu, la position relative et/ou l'étendue du rectangle (*i.e.,* de l'enveloppe dynamique 37) par rapport à l'échelle 23 de tangage évoluent en temps réel en fonction de la variation des paramètres de vol (vitesse, nombre de Mach, taux de tangage, etc.) et configurations (positions des volets, bec, etc.) de l'aéronef.

Selon l'invention, l'affichage de l'enveloppe dynamique 37 est décliné en différentes couleurs comprenant une première couleur (par exemple, verte) représentant une situation de vol normal, une deuxième couleur (par exemple, jaune ou ambre) représentant une situation d'approche vers un décrochage, et une troisième couleur (par exemple, rouge) représentant une situation de décrochage. On notera que les représentations d'approche vers un décrochage ou d'entrée en décrochage de l'enveloppe dynamique 37 sont réalisées en concert avec les alertes sonores ou tactiles effectuées habituellement dans ces situations.

L'exemple de la Fig. 2A illustre le cas où l'aéronef est en situation de vol normal et où l'affichage de l'enveloppe dynamique 37 a été sélectionné par le pilote. Plus particulièrement, dans cet exemple, le côté inférieur du rectangle (*i.e.,* le pointeur de trajectoire 27) est au-dessus de la ligne d'horizon 21 indiquant que l'aéronef est dans une phase de montée. Par ailleurs, le pointeur de tangage 25 (ou plus exactement son élément central 25c) est bien à l'intérieur du rectangle dynamique 37 (colorié en vert) et par conséquent, le pilote dispose d'une bonne marge pour augmenter l'angle de tangage sans sortir du rectangle 37. En outre, les parties horizontales des premier et second éléments 25a, 25b de l'indicateur de tangage 25 sont parallèles à la ligne d'horizon 21 indiquant que l'angle de roulis est nul.

La Fig. 2B illustre le cas où l'aéronef commence à entrer en décrochage et où l'affichage de l'enveloppe dynamique 37 est réalisé de manière automatique. Selon cet exemple, le pointeur de tangage 25 est proche du côté supérieur 33 du rectangle dynamique 37. Dans ce cas, l'angle d'incidence est proche de la valeur critique et par conséquent, le pilote est alerté de manière visuelle (rectangle dynamique 37 colorié en jaune) et sonore pour revenir à une situation de vol normal.

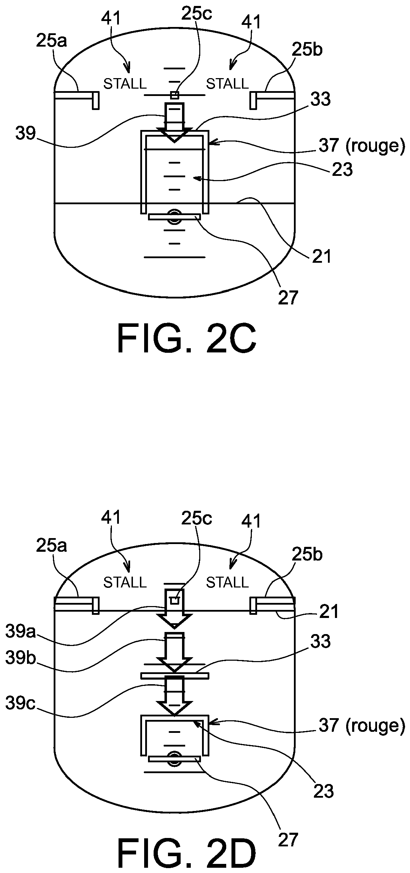

La Fig. 2C illustre le cas où l'aéronef est entré en décrochage. Cet exemple montre que le pointeur de tangage 25 (élément 25c) est sorti du rectangle dynamique 37 et par conséquent, l'angle d'incidence est au-delà de l'angle d'incidence maximale. De plus, l'aéronef est en basse altitude indiquée par le fait que le côté inférieur du rectangle (*i.e.,* le pointeur de trajectoire 27) est en dessous de la ligne d'horizon 21. Le pilote est alors alerté plus vigoureusement de manière sonore, tactile et visuelle. L'alerte visuelle est concrétisée par un changement de couleur du rectangle dynamique 37 qui devient rouge ainsi que par l'affichage d'une flèche 39 directionnelle dirigée dans le sens allant du pointeur de tangage 25 vers l'intérieur de l'enveloppe dynamique 37 incitant le pilote à effectuer les procédures habituelles en particulier à baisser l'angle d'incidence pour ramener le pointeur de tangage (élément 25c) dans le rectangle 37. L'alerte visuelle peut aussi comporter une signalisation clignotante 41 de mots « décrochage » (ou « stall », en anglais) pour attirer encore plus l'attention du pilote.

Dans la situation de la Fig. 2D, l'aéronef est en décrochage avec un angle d'incidence très élevé et bien loin du rectangle dynamique 37 correspondant à un vol normal et en plus, le côté inférieur du rectangle (*i.e.,* pointeur de trajectoire 27) est très en dessous de la ligne d'horizon 21. Les alertes sonore, tactile et visuelle persistent avec l'affichage de plusieurs flèches 39a, 39b, 39c dirigées vers le rectangle dynamique 37 incitant encore plus fermement le pilote à baisser d'abord l'angle d'incidence pour sortir du décrochage et à appliquer ensuite plus de puissance pour augmenter la vitesse et réduire la chute d'altitude.

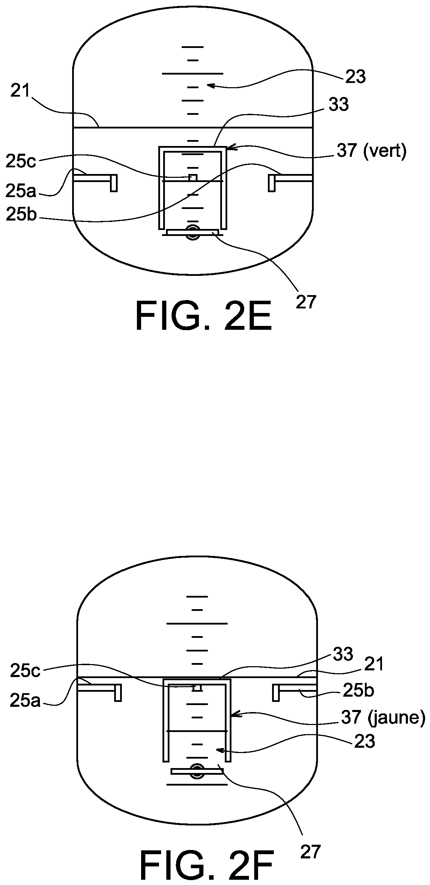

Dans la situation de la Fig. 2E, l'aéronef est sorti du décrochage avec l'élément 25c du pointeur de tangage 25 bien à l'intérieur du rectangle dynamique 37 qui est recoloré en vert sauf que l'altitude de l'aéronef est faible. Le pilote dispose néanmoins d'une bonne marge de tangage pour faire remonter l'aéronef sans sortir du rectangle dynamique 37.

Ainsi, dans la situation de la Fig. 2F, afin de restaurer l'altitude de l'aéronef, l'angle de tangage a été augmenté tout en gardant l'élément 25c du pointeur de tangage 25 à l'intérieur du rectangle dynamique 37 mais juste en dessous du côté supérieur 33 du rectangle 37. Ceci permet de profiter au maximum de la marge de tangage tout en étant sûr de ne pas rentrer dans une situation de décrochage secondaire. Bien entendu, du fait que le pointeur de tangage 25 s'est rapproché du côté supérieur 33 du rectangle dynamique 37, la couleur du rectangle 37 redevient jaune afin d'avertir le pilote à ne pas dépasser l'incidence maximale.

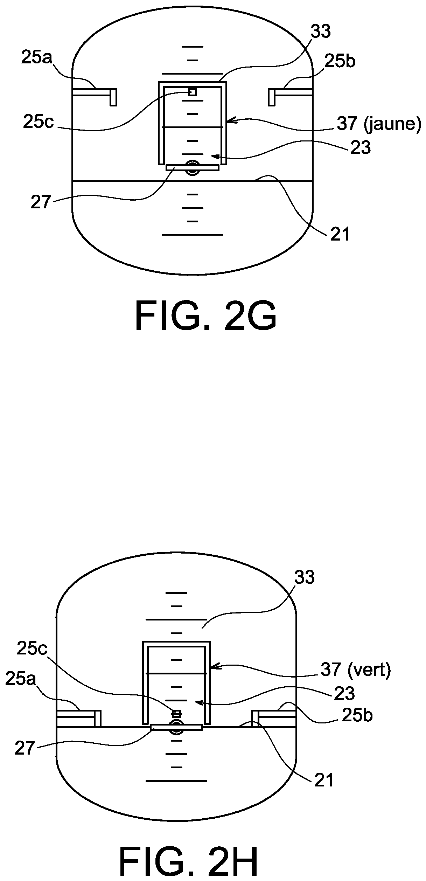

Dans la situation de la Fig. 2G, l'altitude de l'aéronef a été rétablie et le côté inférieur du rectangle (*i.e.,* pointeur de trajectoire 27) est au-dessus de la ligne d'horizon 21. Cependant, la couleur du rectangle dynamique 37 reste en jaune car le pointeur de tangage est toujours proche du côté supérieur du rectangle 37 (*i.e.,* pointeur d'incidence maximale 33).

Finalement, à la Fig. 2H, la couleur du rectangle dynamique 37 redevient verte car l'élément central 25c du pointeur de tangage 25 est bien à l'intérieur du rectangle 37 et l'aéronef revient en situation de vol normal. L'affichage de l'enveloppe dynamique 37 persiste même après la sortie du décrochage jusqu'à ce qu'il soit supprimé par le pilote.

Ainsi, la position relative de l'enveloppe dynamique 37 d'une part par rapport au pointeur de tangage 25 et d'autre part par rapport à la ligne d'horizon 21 permet de réaliser de manière simple une performance optimale pour à la fois sortir d'une situation de décrochage et regagner en altitude sans retomber en décrochage tout en assurant une vitesse appropriée à la phase courante de vol.

Avantageusement, après la sortie du décrochage, le système 1 d'aide au pilotage comporte l'affichage de signaux de commande de roulis pour rétablir la stabilité latérale de l'aéronef.

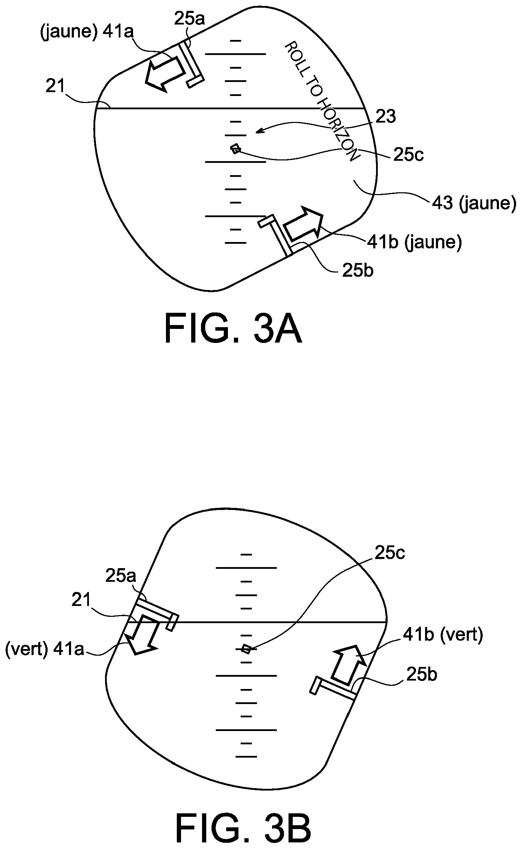

En effet, les Figs. 3A-3C illustrent l'affichage de signaux de commande de roulis pour guider l'équipage dans des mouvements de roulis, selon l'invention.

Avantageusement, les signaux de commande de roulis comportent des flèches 41a, 41b déclinées en différentes couleurs et/ou tailles et éventuellement clignotantes selon que l'opération de remise à l'horizon est réalisée dans le bon ou mauvais sens.

Ici, le principe est de fournir au pilote des indications claires et précises pour le guider à effectuer un mouvement de roulis dans le bon sens vers l'horizon artificiel 21 après que l'aéronef n'est plus en situation de décrochage. Autrement dit, les signaux de commande de roulis ne sont pas affichés pendant que l'aéronef est en situation de décrochage ou en situation d'entrer en décrochage mais en revanche, ils sont automatiquement affichés après que l'aéronef soit sorti de ces situations de décrochage, à savoir lorsque le pointeur de tangage 25c se trouve dans l'enveloppe dynamique 37. Par ailleurs, du moment que l'on n'est pas en situation de décrochage, les signaux de commande de roulis peuvent aussi être affichés pour rétablir une stabilité latérale de l'aéronef.

La Fig. 3A illustre le cas où l'aéronef est sorti de la situation de décrochage mais où les parties horizontales des premier et deuxième éléments 25a, 25b du pointeur de tangage 25 ne sont pas parallèles à la ligne d'horizon 21. Alors, les signaux de commande de roulis s'affichent automatiquement à ce moment pour aider le pilote à effectuer un mouvement de roulis dans le bon sens. En particulier, deux flèches 41a, 41b sont affichées au niveau des premier et deuxième éléments 25a, 25b du pointeur de tangage 25. En effet, des première et deuxième flèches 41a, 41b sont appliquées selon des sens opposés sur les parties horizontales des premier et deuxième éléments 25a, 25b respectivement du pointeur de tangage 25 représentant ainsi un couple de rotation autour de l'élément central 25c du pointeur 25. En outre, les signaux de commande de roulis peuvent aussi comporter une signalisation clignotante 43 de mots « roulis vers l'horizon » (ou « roll to horizon », en anglais). Au départ, les deux flèches 41a, 41b ainsi que la signalisation clignotante 43 sont coloriées en jaune pour attirer l'attention du pilote.

La Fig. 3B montre que lorsque l'action entreprise par le pilote concorde avec les signaux de commande de roulis, la couleur des première et deuxième flèches 41a, 41b devient verte afin d'encourager le pilote dans son action en lui indiquant que le mouvement de roulis est entrain de se dérouler dans le bon sens.

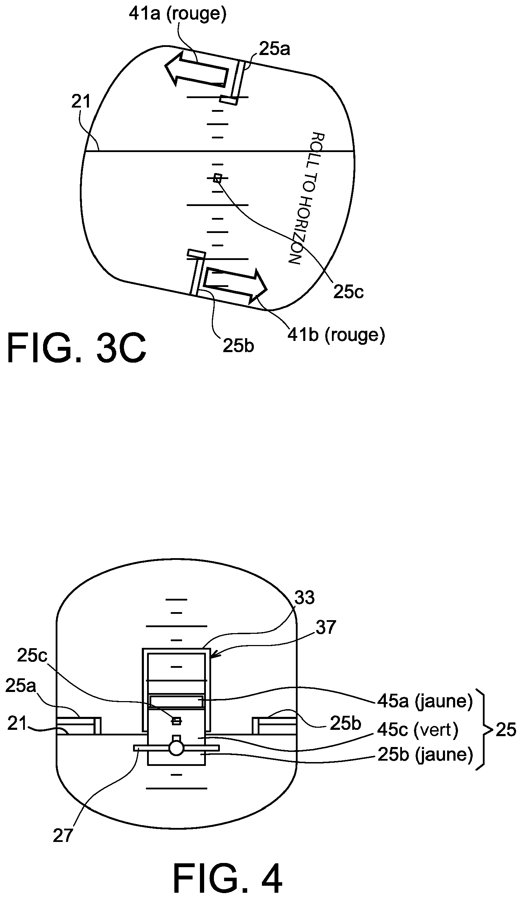

En revanche, la Fig. 3C montre que lorsque le mouvement de roulis initialement réalisé par le pilote est dans le mauvais sens, la taille des première et deuxième flèches 41a, 41b augmente pour attirer l'attention du pilote afin qu'il rectifie son action. De plus, si le pilote persiste à aller dans le mauvais sens, les flèches 41a, 41b commencent à clignoter et deviennent rouges pour attirer davantage l'attention du pilote.

En outre, le système 1 d'aide au pilotage comporte avantageusement l'affichage d'une échelle de vitesse de remplacement « BUSS » (Back-Up Speed Scale).

En effet, la Fig. 4 illustre l'affichage d'un BUSS sur l'écran de visualisation, selon l'invention.

Ainsi, en cas de panne ou de données erronées de l'indicateur habituel de vitesse (non représenté), une bande 45 d'échelle colorée est affichée au même endroit que le rectangle dynamique 37. Dans ce cas, le pointeur de trajectoire 27 est utilisé pour lire la couleur représentative de la vitesse de l'aéronef.

En effet, la bande 45 d'échelle colorée sert à remplacer l'échelle normale de vitesse par une échelle de couleurs déterminée à partir de l'angle d'incidence mesuré par le très robuste capteur d'incidence. La bande 45 d'échelle colorée de vitesse est par exemple de même largeur que le rectangle dynamique 37 et comporte une zone centrale 45a de couleur verte représentative d'une vitesse normale de l'aéronef bordée par des premières zones supérieure 45b et inférieure 45c de couleur jaune d'avertissement et qui à leur tour peuvent être bordées par des secondes zones supérieure et inférieure (non représentées) de couleur rouge représentative d'une vitesse anormale. Ainsi, la bande 45 colorée de vitesse incite le pilote à rester dans la zone centrale 45a de couleur verte pour voler en toute sécurité.

## Revendications

1. Procédé d'aide au pilotage d'un aéronef, selon lequel on présente sur une échelle de tangage (23) d'un écran de visualisation (15), un pointeur de trajectoire (27) représentant un vecteur courant de trajectoire de vol et un pointeur de tangage (25) indiquant une valeur courante d'angle de tangage, **caractérisé en ce qu'**il comporte les étapes suivantes :
- déterminer une valeur d'angle limite de tangage représentative d'un angle d'incidence maximal admissible dépendant d'un ensemble de paramètres de vol et configurations de l'aéronef, et
- afficher sur ladite échelle de tangage (23) de l'écran de visualisation (15) un pointeur d'incidence maximale (33) indiquant ladite valeur limite d'angle de tangage, lesdits pointeurs d'incidence maximale (33) et de trajectoire (27) formant des bornes supérieure et inférieure respectivement d'une enveloppe dynamique (37) de sécurité représentative d'un vol normal de l'aéronef, la position relative et/ou l'étendue de l'enveloppe dynamique (37) par rapport à l'échelle de tangage (23) évoluant en fonction de la variation des paramètres de vol et configurations de l'aéronef, l'affichage dudit pointeur d'incidence maximale (33) ou de ladite enveloppe dynamique (37) étant décliné en différentes couleurs comprenant une première couleur représentant une situation de vol normal, une deuxième couleur représentant une situation d'approche vers un décrochage et une troisième couleur représentant une situation de décrochage.

2. Procédé selon la revendication 1, **caractérisé en ce que** les paramètres de vol comportent le nombre de Mach et le taux de tangage.

3. Procédé selon la revendication 1 ou 2, **caractérisé en ce que** l'affichage dudit pointeur d'incidence maximale (33) ou de ladite enveloppe dynamique (37) est réalisé de manière automatique dès que l'aéronef commence à entrer en décrochage.

4. Procédé selon la revendication 1 ou 2, **caractérisé en ce qu'**en vol normal, l'affichage dudit pointeur d'incidence maximale (33) ou de ladite enveloppe dynamique (37) est réalisé sur demande du pilote.

5. Procédé selon l'une quelconque des revendications précédentes, **caractérisé en ce que** la situation de décrochage est accompagnée par un affichage de flèches directionnelles (39) dirigées dans le sens allant du pointeur de tangage (25) vers l'intérieur de ladite enveloppe dynamique (37).

6. Procédé selon l'une quelconque des revendications précédentes, **caractérisé en ce que** ledit pointeur d'incidence maximale (33) ou ladite enveloppe dynamique (37) reste affiché après la sortie du décrochage jusqu'à ce que le pilote décide de ne plus l'afficher.

7. Procédé selon l'une quelconque des revendications précédentes, **caractérisé en ce qu'**il comporte l'affichage de signaux de commande de roulis (41a, 41b) pour rétablir la stabilité latérale de l'aéronef après la sortie du décrochage ou du moment que l'on n'est pas en situation de décrochage.

8. Procédé selon l'une quelconque des revendications précédentes, **caractérisé en ce qu'**il comporte l'affichage sur l'écran de visualisation d'une échelle de vitesse (43) de remplacement en cas de panne d'un indicateur habituel de vitesse.

9. Système d'aide au pilotage d'un aéronef, comportant un écran de visualisation (15) présentant sur une échelle de tangage (23), un pointeur de trajectoire (27) représentant un vecteur courant de trajectoire de vol et un pointeur de tangage (25) indiquant une valeur courante d'angle de tangage, **caractérisé en ce qu'**il comporte des moyens de calcul (31) configurés pour:
- déterminer une valeur d'angle limite de tangage représentative d'un angle d'incidence maximal admissible dépendant d'un ensemble de paramètres de vol et configurations de l'aéronef,
- afficher sur ladite échelle de tangage (23) de l'écran de visualisation (15) un pointeur d'incidence maximale (33) indiquant ladite valeur limite d'angle de tangage, lesdits pointeurs d'incidence maximale (33) et de trajectoire (27) formant des bornes supérieure et inférieure respectivement d'une enveloppe dynamique (37) de sécurité représentative d'un vol normal de l'aéronef, **caractérise en ce que** l'affichage dudit pointeur d'incidence maximale (33) ou de ladite enveloppe dynamique (37) est décliné en différentes couleurs comprenant une première couleur représentant une situation de vol normal, une deuxième couleur représentant une situation d'approche vers un décrochage et une troisième couleur représentant une situation de décrochage, et
- fait évoluer la position relative et/ou l'étendue de l'enveloppe dynamique (37) par rapport à l'échelle de tangage (23) en fonction de la variation des paramètres de vol et configurations de l'aéronef.

10. Aéronef comportant un système d'aide au pilotage selon la revendication 9.

## Patentansprüche

1. Pilotenassistenzverfahren für ein Luftfahrzeug, gemäß dem auf einer Längsneigungsskala (23) eines Anzeigebildschirms (15) ein Flugbahnzeiger (27), der einen aktuellen Flugbahnvektor repräsentiert, und ein Längsneigungszeiger (25), der einen aktuellen Wert eines Nickwinkels anzeigt, dargestellt werden, **dadurch gekennzeichnet, dass** es die folgenden Schritte umfasst:
- Bestimmen eines Grenzwertes des Nickwinkels, der für einen maximalen zulässigen Anstellwinkel repräsentativ ist, in Abhängigkeit von einer Gesamtheit von Flugparametern und Konfigurationen des Luftfahrzeugs, und
- Anzeigen, auf der Längsneigungsskala (23) des Anzeigebildschirms (15), eines Zeigers des maximalen Anstellwinkels (33), der den Grenzwert des Nickwinkels angibt, wobei der Zeiger des maximalen Anstellwinkels (33) und der Flugbahnzeiger (27) eine obere bzw. untere Schranke einer dynamischen Sicherheitshüllkurve (37) bilden, die für einen normalen Flug des Luftfahrzeugs repräsentativ ist, wobei sich die relative Position und/oder die Ausdehnung der dynamischen Hüllkurve (37) in Bezug auf die Längsneigungsskala (23) in Abhängigkeit von der Änderung der Flugparameter und Konfigurationen des Luftfahrzeugs verändern, wobei die Anzeige des Zeigers des maximalen Anstellwinkels (33) oder der dynamischen Hüllkurve (37) in verschiedenen Farben erfolgt, welche eine erste Farbe, die eine normale Flugsituation darstellt, eine zweite Farbe, die eine Situation der Annäherung an einen Strömungsabriss darstellt, und eine dritte Farbe, die eine Strömungsabrisssituation darstellt, umfassen.

2. Verfahren nach Anspruch 1, **dadurch gekennzeichnet, dass** die Flugparameter die Machzahl und die Nickrate umfassen.

3. Verfahren nach Anspruch 1 oder 2, **dadurch gekennzeichnet, dass** die Anzeige des Zeigers des maximalen Anstellwinkels (33) oder der dynamischen Hüllkurve (37) automatisch erfolgt, sobald das Luftfahrzeug beginnt, in einen Strömungsabriss zu kommen.

4. Verfahren nach Anspruch 1 oder 2, **dadurch gekennzeichnet, dass** im normalen Flug die Anzeige des Zeigers des maximalen Anstellwinkels (33) oder der dynamischen Hüllkurve (37) auf Anforderung des Piloten erfolgt.

5. Verfahren nach einem der vorhergehenden Ansprüche, **dadurch gekennzeichnet, dass** die Strömungsabrisssituation von einer Anzeige von Richtungspfeilen (39) begleitet wird, die in die Richtung vom Längsneigungszeiger (25) zum Inneren der dynamischen Hüllkurve (37) zeigen.

6. Verfahren nach einem der vorhergehenden Ansprüche, **dadurch gekennzeichnet, dass** der Zeiger des maximalen Anstellwinkels (33) oder die dynamische Hüllkurve (37) nach dem Austritt aus dem Strömungsabriss angezeigt bleibt, bis der Pilot entscheidet, ihn bzw. sie nicht mehr anzuzeigen.

7. Verfahren nach einem der vorhergehenden Ansprüche, **dadurch gekennzeichnet, dass** es die Anzeige von Rollsteuersignalen (41a, 41b) zum Wiederherstellen der Seitenstabilität des Luftfahrzeugs nach dem Austritt aus dem Strömungsabriss oder dem Zeitpunkt, zu dem keine Strömungsabrisssituation mehr vorliegt, umfasst.

8. Verfahren nach einem der vorhergehenden Ansprüche, **dadurch gekennzeichnet, dass** es die Anzeige einer Ersatz-Geschwindigkeitsskala (43) auf dem Anzeigebildschirm im Falle eines Ausfalls einer üblichen Geschwindigkeitsanzeige umfasst.

9. Pilotenassistenzsystem eines Luftfahrzeugs, welches einen Anzeigebildschirm (15) umfasst, auf dem auf einer Längsneigungsskala (23) ein Flugbahnzeiger (27), der einen aktuellen Flugbahnvektor repräsentiert, und ein Längsneigungszeiger (25), der einen aktuellen Wert eines Nickwinkels anzeigt, dargestellt werden, **dadurch gekennzeichnet, dass** es Berechnungsmittel (31) umfasst, welche ausgelegt sind zum:
- Bestimmen eines Grenzwertes des Nickwinkels, der für einen maximalen zulässigen Anstellwinkel repräsentativ ist, in Abhängigkeit von einer Gesamtheit von Flugparametern und Konfigurationen des Luftfahrzeugs,
- Anzeigen, auf der Längsneigungsskala (23) des Anzeigebildschirms (15), eines Zeigers des maximalen Anstellwinkels (33), der den Grenzwert des Nickwinkels angibt, wobei der Zeiger des maximalen Anstellwinkels (33) und der Flugbahnzeiger (27) eine obere bzw. untere Schranke einer dynamischen Sicherheitshüllkurve (37) bilden, die für einen normalen Flug des Luftfahrzeugs repräsentativ ist, **dadurch gekennzeichnet, dass** die Anzeige des Zeigers des maximalen Anstellwinkels (33) oder der dynamischen Hüllkurve (37) in verschiedenen Farben erfolgt, welche eine erste Farbe, die eine normale Flugsituation darstellt, eine zweite Farbe, die eine Situation der Annäherung an einen Strömungsabriss darstellt, und eine dritte Farbe, die eine Strömungsabrisssituation darstellt, umfassen, und
- eine Veränderung der relativen Position und/oder der Ausdehnung der dynamischen Hüllkurve (37) in Bezug auf die Längsneigungsskala (23) in Abhängigkeit von der Änderung der Flugparameter und Konfigurationen des Luftfahrzeugs bewirkt.

10. Luftfahrzeug, welches ein Pilotenassistenzsystem nach Anspruch 9 aufweist.

## Claims

1. A method to assist piloting of an aircraft, according to which a trajectory pointer (27) representing a current flight trajectory vector and a pitch pointer (25) indicating a current pitch angle value are shown on a pitch scale (23) of a display screen (15), **characterised in that** it includes the following steps:
- determining a pitch angle limiting value representative of a maximum admissible angle of incidence, depending on a set of flight parameters and aircraft configurations, and
- displaying on the said pitch scale (23) of the display screen (15) a maximum angle of incidence pointer (33) indicating the said pitch angle limiting value, where the said maximum angle of incidence pointer (33) and trajectory pointer (27) form upper and lower limits, respectively, of a dynamic safety envelope (37) representative of a normal flight of the aircraft, the relative position and/or extent of the dynamic envelope (37) relative to the pitch scale (23) change as the flight parameters and configurations of the aircraft change, the display of the said maximum angle of incidence pointer (33) or of the said dynamic envelope (37) is shown using different colours, including a first colour representing a normal flight situation, a second colour representing a situation where a stall is imminent, and a third colour representing a stall.

2. A method according to claim 1, **characterised in that** the flight parameters include the Mach number and the pitch rate.

3. A method according to claim 1 or 2, **characterised in that** the said maximum angle of incidence pointer (33) or the said dynamic envelope (37) are displayed automatically as soon as the aircraft enters a stall.

4. A method according to claim 1 or 2, **characterised in that** in normal flight the said maximum angle of incidence pointer (33) or the said dynamic envelope (37) are displayed at the pilot's request.

5. A method according to any one of the previous claims, **characterised in that** the stall is accompanied by a display of directional arrows (39) pointing in the direction from the pitch pointer (25) towards the interior of the said dynamic envelope (37).

6. A method according to any one of the previous claims, **characterised in that** the said maximum angle of incidence pointer (33) or of the said dynamic envelope (37) remains displayed after coming out of the stall, until the pilot decides no longer to display it.

7. A method according to any one of the previous claims, **characterised in that** it includes the display of roll control signals (41a, 41b) to reestablish the lateral stability of the aircraft after it comes out of the stall, or when the aircraft is not in a stall.

8. A method according to any one of the previous claims, **characterised in that** it includes the display on the display screen of a replacement speed scale (43) in the event of a malfunction of a habitual speed indicator.

9. A system to assist piloting of an aircraft, including a display screen (15) showing a pitch scale (23), where a trajectory pointer (27) represents a current flight trajectory vector and a pitch pointer (25) indicating a current pitch angle value, **characterised in that** it includes calculation means(31)configured to:
- determine a pitch angle limiting value representative of a maximum admissible angle of incidence, depending on a set of flight parameters and aircraft configurations, and
- display on the said pitch scale (23) of the display screen (15) a maximum angle of incidence pointer (33) indicating the said pitch angle limiting value, where the said maximum angle of incidence pointer (33) and trajectory pointer (27) form upper and lower limits, respectively, of a dynamic safety envelope (37) representative of a normal flight of the aircraft, **characterised in that** the display of the said maximum angle of incidence pointer (33) or of the said dynamic envelope (37) is shown using different colours, including a first colour representing a normal flight situation, a second colour representing a situation where a stall is imminent, and a third colour representing a stall, and
- change the relative position and/or extent of the dynamic envelope (37) relative to the pitch scale (23) as the flight parameters and configurations of the aircraft change.

10. An aircraft including a system to assist piloting according to claim 9.
